# EUROPÄISCHE PATENTSCHRIFT

(11) **EP 3 181 971 B1**
(45) Veröffentlichungstag und Bekanntmachung des Hinweises auf die Patenterteilung: **21.08.2019**
(21) Anmeldenummer: 16197943.0
(22) Anmeldetag: 09.11.2016
(51) Int. Cl.: F16L 11/18, H02G 3/04

(54) **FLEXIBLES LEITUNGSELEMENT MIT EINEM MODULAREN METALLSCHLAUCH**
FLEXIBLE PIPE ELEMENT WITH MODULAR METAL HOSE
ELEMENT DE CONDUITE FLEXIBLE AVEC TUYAU MÉTALLIQUE MODULAIRE

(30) Priorität: 15.12.2015 DE 102015121845
(43) Veröffentlichungstag der Anmeldung: 21.06.2017
(73) Patentinhaber: Witzenmann GmbH, 75175 Pforzheim (DE)
(72) Erfinder: Pluschke, Michael, 75305 Neuenbürg (DE)
(74) Vertreter: Lemcke, Brommer & Partner Patentanwälte Partnerschaft mbB

(56) Entgegenhaltungen:
- EP-A1- 0 676 840
- EP-A2- 2 381 551
- DE-A1- 3 120 811
- DE-T2- 69 911 119
- DE-U1- 8 517 279
- DE-U1- 29 623 452
- FR-A1- 2 950 749

## Beschreibung

Die Erfindung betrifft ein flexibles Leitungselement mit einem modularen Metallschlauch.

Schläuche aus Metall können als Wickelschläuche aus einem metallischen Bandmaterial gefertigt sein, welches Bandmaterial schraubenartig um eine Längsachse zu dem Schlauch gewickelt wird, wobei benachbarte Kanten des Bandmaterials formschlüssig miteinander verhakt ausgebildet sind bzw. werden. Derartige Wickelschläuche können als flexible, strömungsleitende Elemente eingesetzt werden, insbesondere als Innenkomponenten in flexiblen Leitungselementen, die als weitere Komponente einen Balg oder Wellschlauch aufweisen.

Wickelschläuche der genannten Art zeichnen sich aufgrund der relativen Beweglichkeit ihrer Wicklungen durch ein gewisses Maß an mechanischer Verlustarbeit im Betrieb, d.h. bei Bewegungen aus, was zur Schwingungsdämpfung ausgenutzt werden kann. Außerdem sind Wickelschläuche bauartbedingt nicht vollständig fluiddicht, weisen also eine gewisse Leckage auf, wobei nach dem Stand der Technik das Leckageverhalten nicht unabhängig von der Verlustarbeit oder allgemein von der Beweglichkeit des Wickelschlauchs gewählt werden kann. Des Weiteren treten beim Wickeln des Schlauchs Eigenspannungen im verwendeten Material auf, die sich aufgrund erhöhten Verschleißes ungünstig auf die Standzeit auswirken.

In der DE 3120811 A1 ist eine flexible Metallkupplung zum Verbinden von Unterwasserleitungen offenbart, welche einen Metallbalg enthält, welcher eine innere Verstärkungskonstruktion, bestehend aus axial ausgerichteten und geschlossenen Stahlringen, aufweist. Diese axial nebeneinander liegenden geschlossenen Stahlringe sind mit Hilfe einer radial außen liegenden Gruppe von umfänglich geteilten Stahlringen verbunden.

Der Erfindung liegt die Aufgabe zugrunde, ein flexibles Leitungselement mit einem Metallschlauch als strömungsführende Innenkomponente zu schaffen, das gegenüber vorbekannten Leitungselementen eine deutlich einfachere Konstruktion aufweist und durch den Einsatz von weniger unterschiedlichen Komponenten eine ökonomische Ausführungsform aufzeigt.
Diese Aufgabe wird gelöst durch ein flexibles Leitungselement mit den Merkmalen des Anspruchs 1 mit einem modular aufgebauten Metallschlauch als Innenkomponente.

Erfindungsgemäß umfasst ein flexibles Leitungselement mit einem modularen Metallschlauch als flexible, strömungsleitende Innenkomponente, welcher Metallschlauch eine Mehrzahl ringförmiger Schlauchelemente aufweist, wobei benachbarte Schlauchelemente paarweise axial ineinander gesteckt und formschlüssig ineinander gehalten sind noch einen Balg oder Wellschlauch als weitere Komponente (Außenkomponente), dadurch gekennzeichnet, dass die Schlauchelemente umfänglich geschlossen sind. In diesem Zusammenhang bedeutet die Formulierung "formschlüssig ineinander gehalten" nur, dass die Schlauchelemente bei betriebsgemäßer Zugbelastung nicht auseinander rutschen, sondern verbunden bleiben. Es soll nicht impliziert sein, dass die Schlauchelemente unbeweglich relativ zueinander fixiert sind. Da das Wickeln auf diese Weise vollständig entfällt, ergibt sich wegen fehlender Eigenspannung ein verbessertes Verschleißverhalten. Über die Einstecktiefe lassen sich zudem die erreichbare Verlustarbeit und das Leckageverhalten im Wesentlichen unabhängig voneinander gestalten. Letzteres kann zudem über die umfängliche Unterbrechung einzelner Schlauchelemente gezielt beeinflusst werden.

Entsprechend sieht eine erste Weiterbildung des erfindungsgemäßen Leitungselements vor, dass benachbarte Schlauchelemente in axialer Richtung zwischen einer ersten Relativposition und einer zweiten Relativposition zueinander beweglich sind. Durch die konstruktive Ausbildung dieser Relativpositionen lässt sich die Beweglichkeit des Metallschlauchs gezielt vorgeben. Die erste Relativposition kann einem Druckanschlag der beiden Schlauchelemente bei Beanspruchung auf Druck entlang einer Längsachse des Schlauchs entsprechen; die zweite Relativposition einem Zuganschlag bei entsprechender Beanspruchung auf Zug.

Eine andere Weiterbildung des erfindungsgemäßen Leitungselements sieht entsprechend vor, dass in der ersten Relativposition benachbarte Schlauchelemente maximal ineinander geschoben sind.

Eine wieder andere Weiterbildung des erfindungsgemäßen Leitungselements sieht entsprechend vor, dass in der zweiten Relativposition benachbarte Schlauchelemente maximal auseinander gezogen sind.

Der vorstehend beschriebene Metallschlauch kann baukastenartig auf einem Schlauchelement aus einem metallischen Werkstoff basieren, das als umfänglich geschlossenes Ringteil ausgebildet ist. Ein solches Schlauchelement weist gemäß einem anderen Aspekt der Erfindung folgende Elemente in axialer Abfolge auf: einen ersten Endabschnitt; einen ersten Teilabschnitt; einen Übergangsabschnitt; einen zweiten Teilabschnitt; und einen zweiten Endabschnitt. In dem ersten Endabschnitt weist das Schlauchelement einen größeren Außendurchmesser auf als in dem ersten Teilabschnitt. In dem zweiten Teilabschnitt weist das Schlauchelement einen Innendurchmesser auf, der (etwas) größer ist als der Außendurchmesser in dem ersten Endabschnitt. Und in dem zweiten Endabschnitt weist das Schlauchelement einen Innendurchmesser auf, der kleiner ist als der Außendurchmesser in dem ersten Endabschnitt. Ein solches Schlauchelement eignet sich zu Herstellung modular aufgebauter Metallschläuche der oben beschriebenen Art. Insbesondere lässt sich über die relativen Längen der ersten und zweiten Teilabschnitte eine Flexibilität des hergestellten Metallschlauchs gezielt beeinflussen und insbesondere gegenüber herkömmlichen, gewickelten Schläuchen vergrößern.

In Weiterbildung des Schlauchelements bzw. des erfindungsgemäßen Leitungselements kann vorgesehen sein, dass es in dem ersten Teilabschnitt und/oder in dem zweiten Teilabschnitt einen konstanten Durchmesser aufweist. Dies fördert u.a. die Beweglichkeit und verringert Verschleißeffekte. Um gezielt eine angulare Beweglichkeit zu verbessern, kann auch vorgesehen sein, dass das Schlauchelement beispielsweise in dem ersten Teilabschnitt eine konvex abgerundete Außenkontur aufweist.

In Weiterbildung des Schlauchelements bzw. des erfindungsgemäßen Leitungselements kann auch vorgesehen sein, dass es in dem Übergangsabschnitt eine vorzugsweise axial gleichmäßige Veränderung seines Durchmessers von dem ersten Teilabschnitt zu dem zweiten Teilabschnitt aufweist. Der Übergangsabschnitt kann als Anschlag beim Zusammenschieben verbundener Schlauchelemente dienen.

In Weiterbildung des Schlauchelements bzw. des erfindungsgemäßen Leitungselements kann weiterhin vorgesehen sein, dass es in dem ersten Endbereich eine vorzugsweise axial gleichmäßige Vergrößerung seines Durchmessers hin zu seinem ersten Ende aufweist, höchst vorzugsweise gefolgt von einer insbesondere zu der genannten Vergrößerung symmetrischen endständigen Verringerung seines Durchmessers bis etwa auf den Durchmesser in dem ersten Teilabschnitt. Die so gebildete Struktur im (ersten) Endbereich des Schlauchelements kann beim Zusammenschieben verbundener Schlauchelemente mit dem Übergangsabschnitt in Wechselwirkung treten. Insbesondere die beschriebene konische Ausbildung mit Vergrößerung und Verringerung des Durchmessers sorgt hierbei für eine verbesserte Stabilität und Widerstandsfähigkeit bei Druckbelastung in axialer Richtung.

Eine andere Weiterbildung des Schlauchelements bzw. des erfindungsgemäßen Leitungselements ist dadurch gekennzeichnet, dass es in dem zweiten Endbereich eine vorzugsweise axial gleichmäßige Vergrößerung seines Durchmessers hin zu seinem zweiten Ende aufweist. Diese Vergrößerung kann dazu dienen, ein Herausziehen des Schlauchelements aus einem benachbarten Schlauchelement zu verhindern, indem es mit dem ersten Endbereich des benachbarten Schlauchelements zusammenwirkt.

Eine wieder andere Weiterbildung des Schlauchelements bzw. des erfindungsgemäßen Leitungselements ist dadurch gekennzeichnet, dass es in dem ersten Endabschnitt und/oder in dem ersten Teilabschnitt außen wenigstens ein vorzugsweise umfänglich geschlossenes, also ringförmiges Wirkelement aufweist, dessen Außendurchmesser einem Innendurchmesser des zweiten Teilabschnitts im Wesentlichen entspricht. Das Wirkelement kann speziell (schwingungs-)dämpfende, (thermisch)isolierende, (Reib-)verschleißmindernde und/oder definierte Fluiddurchlässigkeits- Eigenschaften aufweisen, um entsprechende Eigenschaften des zu fertigenden Metallschlauchs gezielt zu beeinflussen. Das Wirkelement kann in einem keramischen Material, einem Metall (z.B. als Drahtpressring), einem Kunststoff oder einem anderen geeigneten Material oder Materialverbund ausgebildet sein.

Es ist nicht erforderlich, dass das Schlauchelement einteilig ausgebildet ist. Um insbesondere die Beweglichkeit des Schlauchs oder sein Leckageverhalten besonders gezielt zu beeinflussen, kann vorgesehen sein, dass das Schlauchelement aus wenigstens einem ersten Teilelement und einem zweiten Teilelement aufgebaut ist, die axial ineinander gesteckt und formschlüssig ineinander gehalten sind, wobei in dem gesteckten Zustand das erste Teilelement zumindest den ersten Endabschnitt und den ersten Teilabschnitt ausbildet, und wobei in dem gesteckten Zustand das zweite Teilelement zumindest den zweiten Endabschnitt und den zweiten Teilabschnitt ausbildet. Dabei können die beiden Teilelemente ihrerseits gegeneinander axial verschiebbar sein, um die Flexibilität der geschaffenen Anordnung zu erhöhen. Mehrere derart aus Teilelementen zusammengesetzte Schlauchelemente können dann ihrerseits wieder einen erfindungsgemäßen modularen Metallschlauch bilden.

Offenbart ist weiterhin ein Verfahren zum Herstellen eines Metallschlauchs, bei dem eine Anzahl von Schlauchelementen gemäß einer der vorstehend beschriebenen Ausführungsformen axial ineinander gesteckt werden, indem ein Schlauchelement mit seinem ersten Endabschnitt und mit seinem ersten Teilabschnitt in ein anderes Schlauchelement im Wesentlichen axial eingeführt wird.

Außerdem offenbart ist eine Vorrichtung zur vorzugsweise automatisierten Herstellung eines Metallschlauchs aus einer Anzahl von Schlauchelementen gemäß einer der vorstehend beschriebenen Ausführungsformen, aufweisend: eine Halteeinrichtung, die zum Halten oder Fixieren eines ersten Schlauchelements oder eines bereits hergestellten Teilschlauchs mit endständigem erstem Schlauchelement ausgebildet ist; eine Bereitstellungseinrichtung, die dazu ausgebildet ist, ein weiteres, mit dem ersten Schlauchelement zu verbindendes Schlauchelement am Ort der Halteeinrichtung mit vorgebbarer Orientierung im Bereich des zweiten Endabschnitts des ersten Schlauchelements bereit zu stellen; eine Fügeeinrichtung, die dazu ausgebildet ist, das bereitgestellte weitere Schlauchelement mit seinem ersten Endabschnitt und seinem ersten Teilabschnitt in das erste Schlauchelement axial einzuführen; und eine Steuereinrichtung, die dazu ausgebildet ist, ein Ende des Herstellvorgangs anzuzeigen, wenn eine vorgegebene Anzahl Schlauchelemente verbunden wurde oder wenn eine vorgegebene Schlauchlänge erreicht wurde, und/oder die dazu ausgebildet ist, das Fügen der Schlauchelemente wegbasiert oder kraftbasiert zu steuern.

Weitere Eigenschaften und Vorteile der Erfindung ergeben sich aus der folgenden Figurenbeschreibung anhand der Zeichnung.
- Fig. 1: zeigt einen modularen Metallschlauch in einer Draufsicht;
- Fig. 2: zeigt einen Schnitt durch den Metallschlauch aus Figur 1 entlang der Linie A-A;
- Fig. 3: zeigt einen Längsschnitt durch einen weiteren Metallschlauch;
- Fig. 4: zeigt einen Längsschnitt durch einen anderen Metallschlauch;
- Fig. 5: zeigt einen Längsschnitt durch noch einen anderen Metallschlauch, der nicht unter die Erfindung fällt;
- Fig. 6: zeigt einen Längsschnitt durch eine weitere Alternative eines Metallschlauchs, die nicht unter die Erfindung fällt;
- Fig. 7: zeigt einen wieder anderen Metallschlauch, der nicht unter die Erfindung fällt, in einer Draufsicht;
- Fig. 8: zeigt den Metallschlauch aus Fig. 7 in einem Schnitt entlang der Linie A-A;
- Fig. 9: zeigt ein Detail B aus Fig. 8;
- Fig. 10: zeigt noch einen anderen Metallschlauch, der nicht unter die Erfindung fällt, in der Draufsicht;
- Fig. 11: zeigt den Metallschlauch aus Fig. 10 in einem Schnitt entlang der Linie A-A;
- Fig. 12: zeigt ein Detail B aus Fig. 11;
- Fig. 13: zeigt wieder einen anderen Metallschlauch, der nicht unter die Erfindung fällt, teilweise im Längsschnitt;
- Fig. 14: zeigt den Metallschlauch aus Fig. 13 in einem anderen Betriebszustand;
- Fig. 15: zeigt ein Detail A aus Fig. 13;
- Fig. 16: zeigt ein Detail B aus Fig. 14;
- Fig. 17: zeigt wieder einen anderen Metallschlauch im Längsschnitt;
- Fig. 18: zeigt noch einen anderen Metallschlauch im Längsschnitt;
- Fig. 19: zeigt einen weiteren Metallschlauch im Längsschnitt, bei dem einzelne Schlauchelemente zweiteilig ausgebildet sind;
- Fig. 20: zeigt noch einen Metallschlauch im Längsschnitt, bei dem einzelne Schlauchelemente zweiteilig ausgebildet sind; und
- Fig. 21: zeigt schematisch eine mögliche Ausgestaltung der Vorrichtung zur vorzugsweise automatisierten Herstellung eines Metallschlauchs aus einer Anzahl von Schlauchelementen.

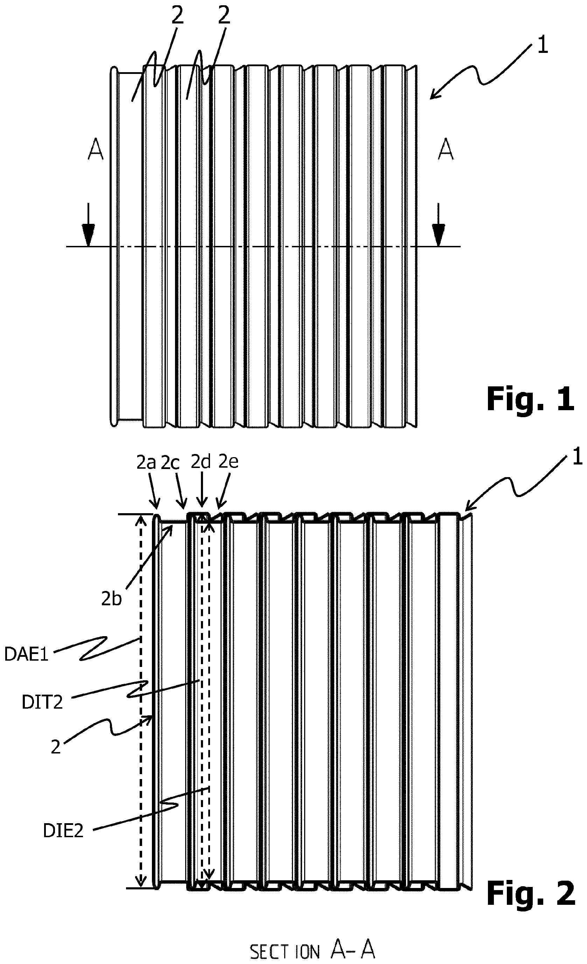

In Fig. 1 ist ein modular aufgebauter Metallschlauch 1 in der Draufsicht gezeigt. Der Metallschlauch 1 besteht aus einer Anzahl von axial ineinandergesteckten und formschlüssig ineinander gehaltenen Schlauchelemente 2, die aus Gründen der Übersichtlichkeit nicht alle bezeichnet sind. Dies wird nachfolgend anhand der Schnittansicht in Fig. 2 und anhand der weiteren Figuren noch genauer erläutert.

Wie sich der Fig. 2 für das linke, endständige Schlauchelement 2 exemplarisch entnehmen lässt, weist dieses in axialer Abfolge von links nach rechts folgende Abschnitte oder Bereiche auf: einen ersten Endabschnitt 2a, einen ersten Teilabschnitt 2b, einen Zwischen- oder Übergangsabschnitt 2c, einen zweiten Teilabschnitt 2d und einen zweiten Endabschnitt 2e. Alle weiteren Schlauchelemente, die in Fig. 2 nicht explizit bezeichnet sind, sind identisch aufgebaut. In dem ersten Endabschnitt 2a weist das Schlauchelement 2 einen größeren Außendurchmesser DAE1 auf als in dem ersten Teilabschnitt 2b. In dem zweiten Teilabschnitt 2b weist das Schlauchelement einen Innendurchmesser DIT2 auf, der größer ist als der Außendurchmesser DAE1 in dem ersten Endabschnitt 2a. Im zweiten Endabschnitt 2e weist das Schlauchelement 2 einen Innendurchmesser DIE2 auf, der kleiner ist als der Außendurchmesser DAE1 in dem ersten Endabschnitt 2a. Auf diese Weise lässt sich der dargestellte, modular aufgebaute Metallschlauch 1 aus einer Mehrzahl von Schlauchelementen 2 herstellen. Jedes Schlauchelement 2 greift mit seinem ersten Endabschnitt 2a im Bereich des zweiten Teilabschnitts 2d eines benachbarten Schlauchelements 2 ein. Da in dem zweiten Endabschnitt 2e des Schlauchelements 2 der wirksame Innendurchmesser DIE2 kleiner ist als der Außendurchmesser DAE1 in dem ersten Endabschnitt 2a des benachbarten, eingesteckten Schlauchelements 2, kann letzteres auch unter Zug nicht in axialer Richtung aus dem erstgenannten Schlauchelement 2 herausrutschen. Bei Druckbelastung schlägt ein eingestecktes Schlauchelement 2 im Bereich seines ersten Endabschnitts 2a in dem genannten Zwischen- oder Übergangsabschnitt 2c an dem benachbarten Schlauchelement an, in welchem Abschnitt sich der Durchmesser auf den Durchmesser in dem ersten Teilabschnitt 2b verringert, welcher Durchmesser kleiner ist als der Außendurchmesser DAE1 des eingesteckten Schlauchelements 2. Dies wird weiter unten anhand der nachfolgenden Abbildungen noch genauer ersichtlich werden.

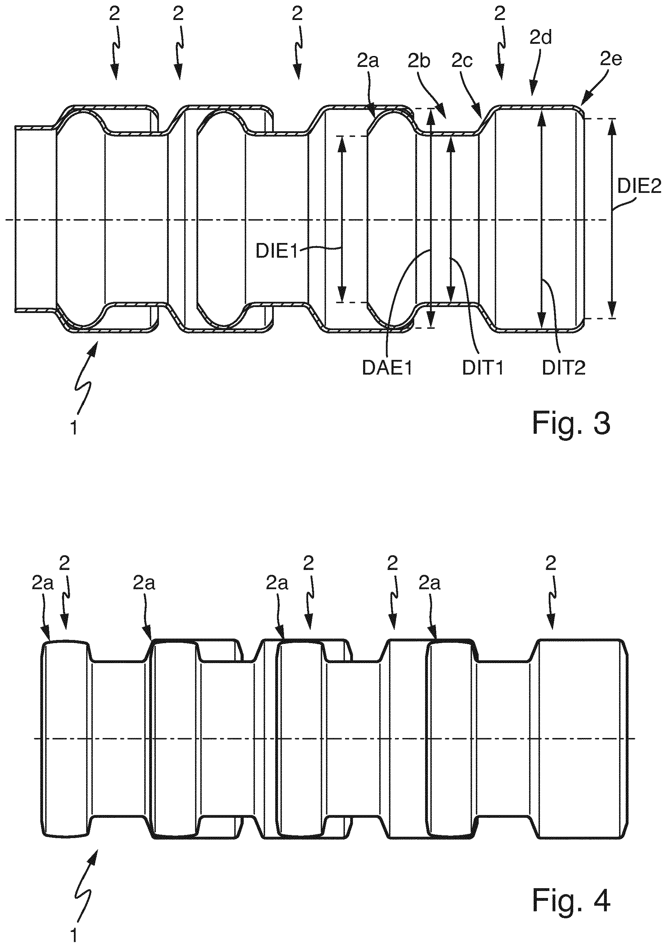

Fig. 3 zeigt eine etwas andere Ausgestaltung eines modular aufgebauten Metallschlauchs 1 im Längsschnitt. Die vorstehend gemachten Angaben zum Zusammenwirken benachbarter Schlauchelemente 2 behalten jedoch ihre grundsätzliche Gültigkeit. Dabei bezeichnen alle Figuren gleiche Bezugszeichen gleiche oder zumindest gleich wirkende Elemente.

Der Fig. 3 entnehmbar ist, dass das einzelne Schlauchelement 2 in seinem ersten Endabschnitt 2a eine konvex abgerundete Außenkontur aufweist. Daran schließt sich - von links nach rechts in axialer Richtung der bereits erwähnte erste Teilabschnitt 2b an, in dem das Schlauchelement 2 einen deutlich kleineren Durchmesser aufweist als in dem ersten Endbereich 2a (Außendurchmesser DAE1). Dabei entspricht ein endständiger Innendurchmesser DIE1 des Schlauchleitungselements 2 im Wesentlichen dem Innendurchmesser DIT1 in dem ersten Teilabschnitt 2b. An den ersten Teilabschnitt 2b schließt sich der erwähnte Zwischen- oder Übergangsabschnitt 2c auf, in dem sich der (Innen-) Durchmesser des Schlauchelements 2 vergrößert: Der Innendurchmesser DIT2 im Bereich des zweiten Teilabschnitts 2d ist größer als der Innendurchmesser DIT1 im Bereich des ersten Teilabschnitts 2b. Anschließend folgt in axialer Richtung der bereits erwähnte zweite Endabschnitt 2e, in dem sich der (Innen-) Durchmesser wieder verringert: DIE2 < DIT2. Dabei ist - wie bereits erwähnt - DIE2 ≤ DAE1, so dass ein eingestecktes Schlauchelement 2 nicht aus seinem benachbarten Schlauchelement 2, in welches es eingesteckt ist, axial herausrutschen kann. Dieser "Zuganschlag" ist im rechten Teil von Fig. 3 dargestellt. Im mittleren Teil der Figur sieht man einen Zwischenzustand, bei dem sich das eingesteckte Schlauchelement 2 mit seinem ersten Endabschnitt 2a im Bereich des zweiten Teilabschnitts 2d eines benachbarten Schlauchelements axial (frei) bewegen kann. Im linken Teil von Fig. 3 ist ein sogenannter "Druckanschlag" gezeigt, bei dem das eingesteckte Schlauchelement im Bereich seines ersten Endabschnitts 2a mit dem Übergangs- oder Zwischenabschnitt 2c in Anlage tritt, weil DAE1 ≥ DIT1 ist. DIT2 ist vorzugsweise geringfügig größer als DAE1, um die angesprochene axiale Relativbewegung benachbarter Schlauchelemente 2 zu ermöglichen. Die Abrundung des Schlauchelements 2 im Bereich des ersten Endabschnitts 2a ermöglicht eine gute angulare Beweglichkeit. Aus diesem Grund ist DIE2 etwas größer als ein Außendurchmesser des Schlauchelements 2 im Bereich des ersten Teilabschnitts 2b. Außerdem erleichtert dieser Umstand das Ineinanderstecken der Schlauchelemente 2 zur Herstellung eines Metallschlauchs 1, was durch eine nicht zu vernachlässigende radiale Flexibilität der Schlauchelemente 2 speziell im Bereich des zweiten Endabschnitts 2e und des zweiten Teilabschnitts 2d unterstützt wird.

Fig. 4 zeigt eine alternative Ausgestaltung eines Metallschlauchs 1. Der wesentliche Unterschied zur Ausgestaltung gemäß Fig. 3 besteht darin, dass die einzelnen Schlauchelemente 2 im Bereich ihres ersten Endabschnitts 2a weniger stark abgerundet ausgebildet sind. Auf weitere Einzelheiten der Ausgestaltung gemäß Fig. 4 ist vorliegend nicht genauer einzugehen.

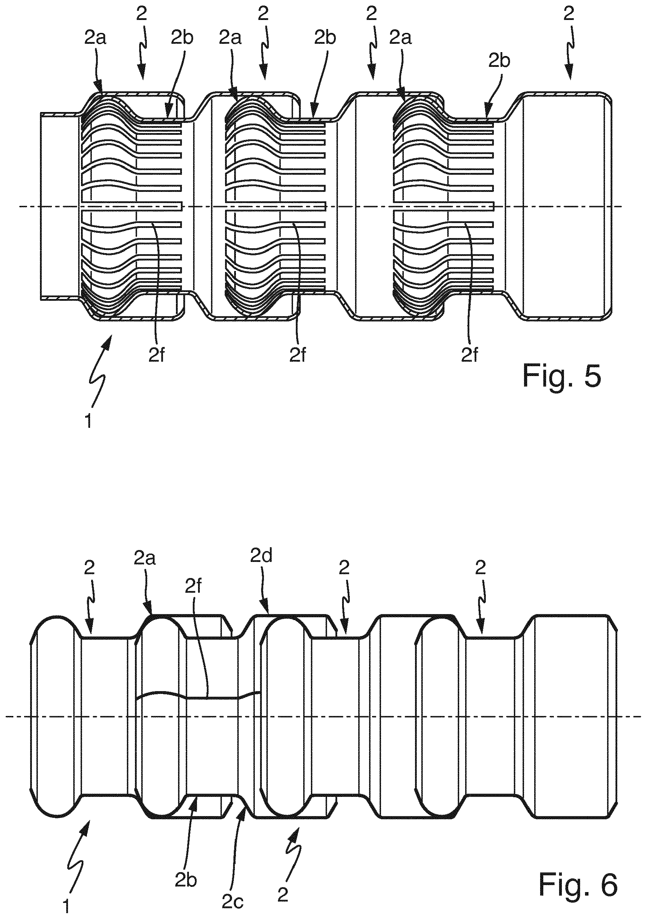

In Fig. 5 ist eine weitere alternative Ausgestaltung eines modular aufgebauten Metallschlauchs 1 gezeigt, die grundsätzlich der Ausgestaltung gemäß Fig. 3 entspricht. Die einzelnen Schlauchelemente 2 weisen im Bereich ihrer ersten Endabschnitte 2a und ihrer ersten Teilabschnitte 2b eine Anzahl von Längsschlitzen 2f auf, die in regelmäßigem Abstand über den Umfang des jeweiligen Schlauchelements 2 verteilt angeordnet sind. Über die Anzahl, Länge und Breite der Längsschlitze 2f lässt sich ein Leckageverhalten des Metallschlauchs 1 gezielt beeinflussen. Außerdem können die Längsschlitze 2f sich günstig auf die Einsteckbarkeit der Schlauchelemente 2 ineinander auswirken.

Fig. 6 zeigt eine zur Fig. 5 vergleichbare Ausgestaltung, bei der jedoch nur ein Schlitz 2f und dieser nur an einem einzigen der insgesamt vier dargestellten Schlauchelemente 2 erkennbar ist. Darüber hinaus erstreckt sich dieser Schlitz 2f sogar bis in den Bereich des zweiten Teilabschnitts 2d, also vom ersten Endabschnitt 2a über den ersten Teilabschnitt 2b und den Übergangsabschnitt 2c bis in den zweiten Teilabschnitt 2d. Auch hierdurch lässt sich insbesondere das Leckageverhalten des Metallschlauchs 1 gezielt beeinflussen.

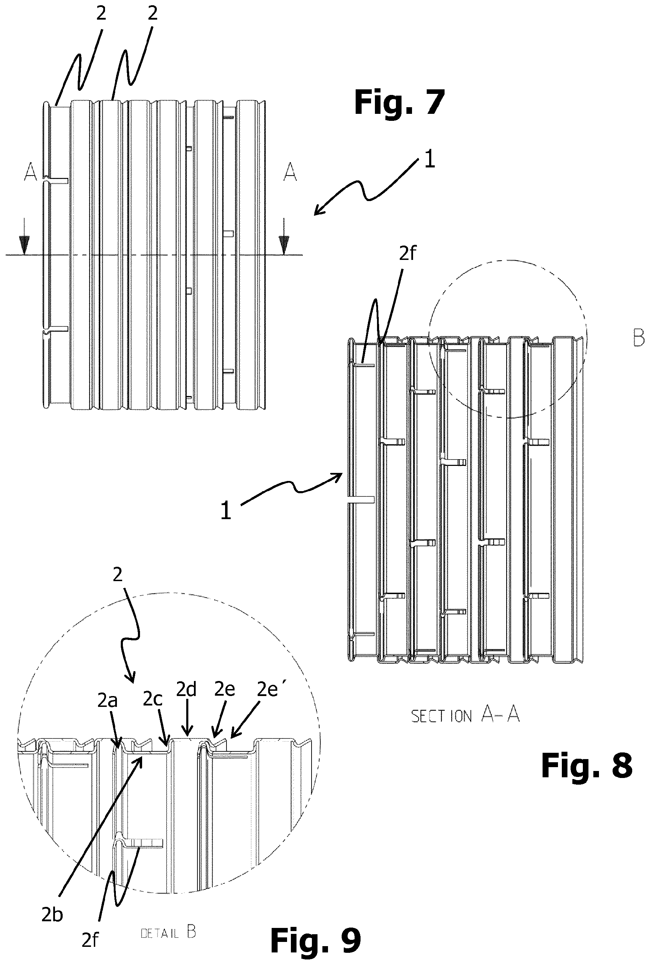

Der in den Fig. 7 bis 9 dargestellte Schlauch 1 entspricht grundsätzlich dem aus Fig. 1 und Fig. 2. Der einzige Unterschied besteht darin, dass gemäß den Fig. 7 bis 9 eine Reihe von über den Umfang verteilten Schlitzen 2f vorgesehen sind, die sich jeweils durch den ersten Endbereich 2a und über einen größten Teil des ersten Teilabschnitts 2b erstrecken. Pro Schlauchelement 2 sind deutlich weniger Schlitze vorhanden, als bei der Ausgestaltung gemäß Fig. 5.

Anhand der Fig. 9 lässt sich das bereits anhand von Fig. 2 erläuterte Profil der einzelnen Schlauchelemente 2 nochmals besonders gut erkennen. Hervorzuheben ist allenfalls noch, dass das dargestellte Schlauchelement 2 im Bereich des zweiten Endabschnitts 2e endständig aus Stabilitätsgründen noch eine Aufweitung 2e' bis etwa auf den Außendurchmesser des Schlauchelements 2 im Bereich des zweiten Teilabschnitts 2d aufweist. Anders als im Bereich des ersten Endabschnitts 2a ist der Verlauf im Bereich des zweiten Endabschnitts 2e und der angesprochenen Aufweitung 2e' jedoch nicht vollständig symmetrisch, wie der Fig. 9 noch entnehmbar ist.

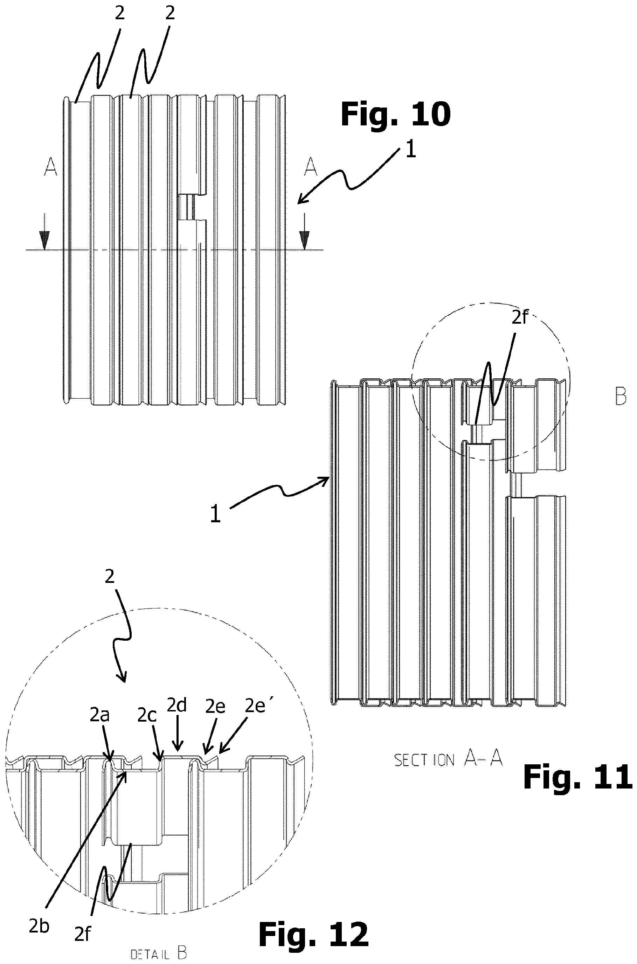

Die Fig. 10 bis 12 zeigen einen Metallschlauch 1, der vergleichbar zu dem Metallschlauch gemäß den Fig. 7 bis 9 ausgebildet ist. Die einzige Abweichung findet sich im Bereich der Schlitze 2f, die gemäß der Figuren 10 bis 12 deutlich breiter und länger ausgebildet sind und sich insbesondere durch alle Abschnitte 2a-2e des Schlauchelements 2 hindurch erstrecken können. Entsprechend ist das Schlauchelement 2 dann als umfänglich einfach geöffnetes Ringteil ausgebildet, was grundsätzlich bei allen vorliegend beschriebenen Schlauchelementen der Fall sein kann und grundsätzlich nicht auf die Ausgestaltung gemäß der Fig. 10 bis 12 beschränkt ist.

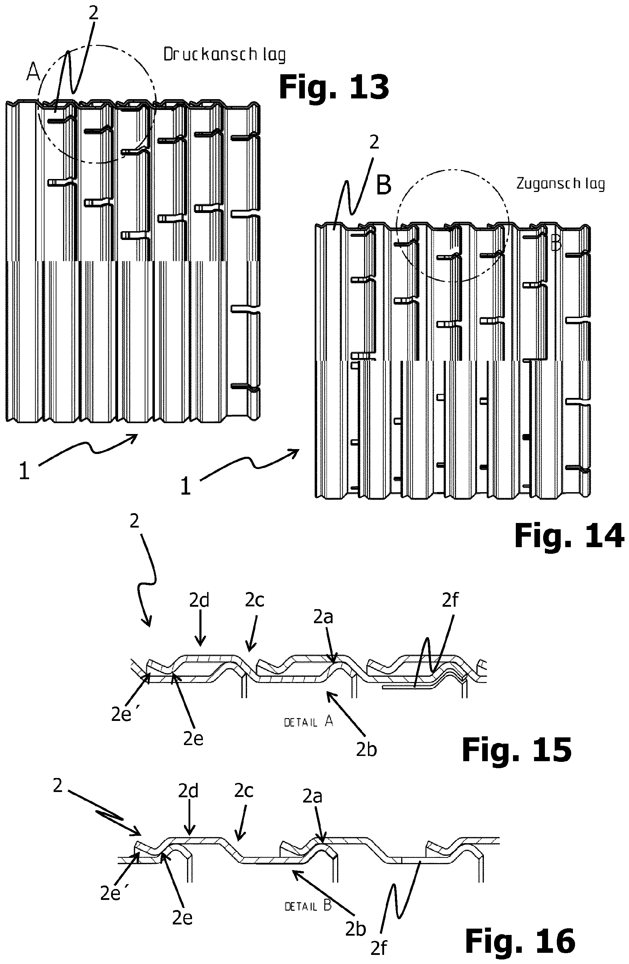

Die Figuren 13 bis 16 zeigen eine weitere Ausgestaltung eines Metallschlauchs 1, der modular aus einer Anzahl von Schlauchelementen 2 zusammengesetzt ist. Wie aus den Figuren 13 und 14 erkennbar ist, weisen die einzelnen Schlauchelemente 2 wiederum eine Anzahl von Schlitzen 2f auf, die umfänglich verteilt angeordnet sind. In den Detailansichten gemäß Fig. 15 und Fig. 16 sind die einzelnen Abschnitte der Schlauchelemente 2 genauer bezeichnet. Grundsätzlich entspricht deren Ausgestaltung derjenigen in den Figuren 1 und 2 bzw. 7 bis 9, wobei lediglich die Darstellungs- bzw. Fügerichtung an einer vertikalen Achse gespiegelt wurde. Gegenüber der Ausgestaltung insbesondere gemäß Fig. 9 oder Fig. 12 ist bei den Schlauchelementen gemäß der Fig. 13 bis 16 der Zwischen- oder Übergangsabschnitt 2c weniger steil ausgebildet bzw. weist eine größere axiale Erstreckungskomponente auf.

Die Figuren 13 und 15 zeigen den bereits erwähnten Druckanschlag, bei dem der Metallschlauch 1 insgesamt eine minimale Länge aufweist, während der erste Endabschnitt 2a eines gegebenen Schlauchelements 2 im Bereich des Zwischenabschnitts 2c eines benachbarten Schlauchelements 2 anliegt.

In den Fig. 14 und 16 ist der bereits erwähnte Zuganschlag dargestellt, bei dem der Metallschlauch 1 insgesamt eine maximale Länge aufweist. Hier liegt bei einem gegebenen Schlauchelement 2 der erste Endabschnitt 2a im Bereich des zweiten Endabschnitts 2e eines benachbarten Schlauchelements 2 an.

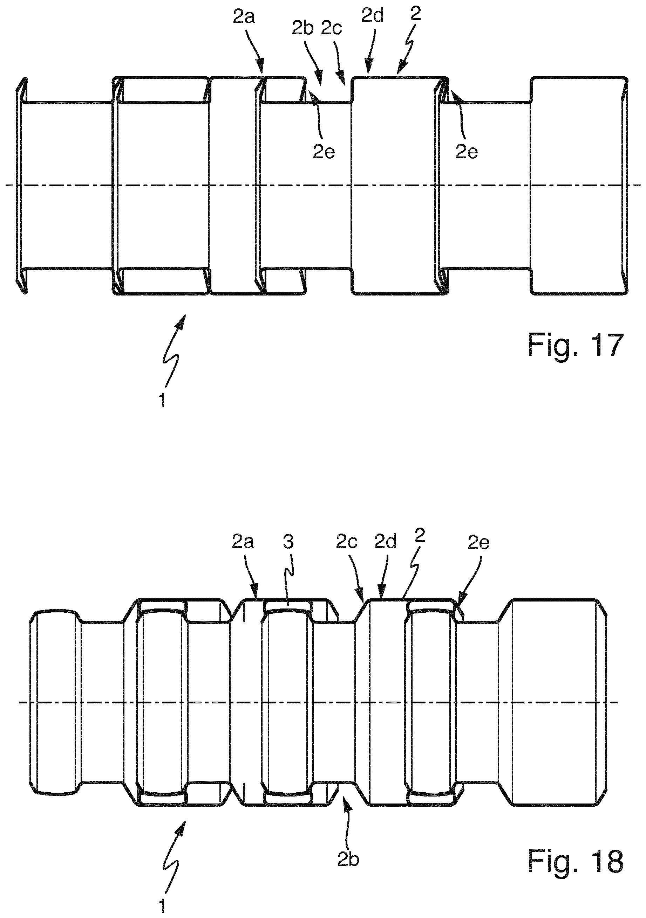

In Fig. 17 ist eine weitere Ausgestaltung eines aus Schlauchelementen 2 zusammengesetzten Metallschlauchs 1 dargestellt, der sich von den bislang beschriebenen Ausgestaltungen durch die konkrete geometrische Ausgestaltung im Bereich des ersten Endabschnitts 2a und des zweiten Endabschnitts 2e unterscheidet, wie dargestellt. In beiden Fällen ergibt sich eine in Richtung der Längsachse der Anordnung eingezogene Struktur, wodurch sich insbesondere beim Zuganschlag eine Art Formschluss ergibt.

Bei der Ausführungsform des Metallschlauchs 1 gemäß Fig. 18 ist der erste Endabschnitt 2a in axialer Richtung deutlich länger ausgebildet als bei den bisherigen Varianten. Außerdem weist der erste Endabschnitt 2a im Verhältnis zu einem (Innen-)Durchmesser des zweiten Teilabschnitts 2d eine deutlich geringere radiale Erstreckung auf, so dass dazwischen ein Spalt verbleibt, der bei der Ausführungsform gemäß Fig. 18 mit einem ringförmigen, umfänglich geschlossenen Wirkelement 3 überbrückt ist. Das Wirkelement ist außen auf dem ersten Endabschnitt 2a des Schlauchelements 2 in geeigneter Weise kraft-, stoff- oder formschlüssig gehalten und kann gezielt in einem Material mit bestimmten, ausgewählten Eigenschaften ausgebildet sein, um bestimmte Eigenschaften des Metallschlauchs 1 als Ganzes gezielt zu beeinflussen. Beispielsweise und ohne Beschränkung kann das Wirkelement 3 in einem Material ausgebildet sein, das eine definierte Fluiddurchlässigkeit aufweist, um das Leckageverhalten des Metallschlauchs 1 zu steuern. Zusätzlich oder alternativ kann das Wirkelement 3 in einem Material ausgebildet sein, welches sich günstig auf das Verschleißverhalten des Metallschlauchs 1 auswirkt, indem es einen Verschleiß bei der Relativbewegung benachbarter Schlauchelemente 2 reduziert. Zusätzlich oder alternativ kann das Wirkelement 3 in einem thermisch isolierenden und/oder schwingungsdämpfenden Material ausgebildet sein. Mögliche Materialien für das Wirkelement 3 umfassen keramische Materialien, metallische Werkstoffe, Kunststoffe oder Verbundmaterialien aus den genannten Werkstofftypen. Insbesondere kann das Wirkelement 3 als Drahtpressring oder dergleichen ausgebildet sein.

Wie auch Fig. 17 zeigt Fig. 18 im linken Teil der Darstellung den Druckanschlag, im rechten Teil der Darstellung den Zuganschlag und im mittleren Teil der Darstellung eine Zwischenstellung.

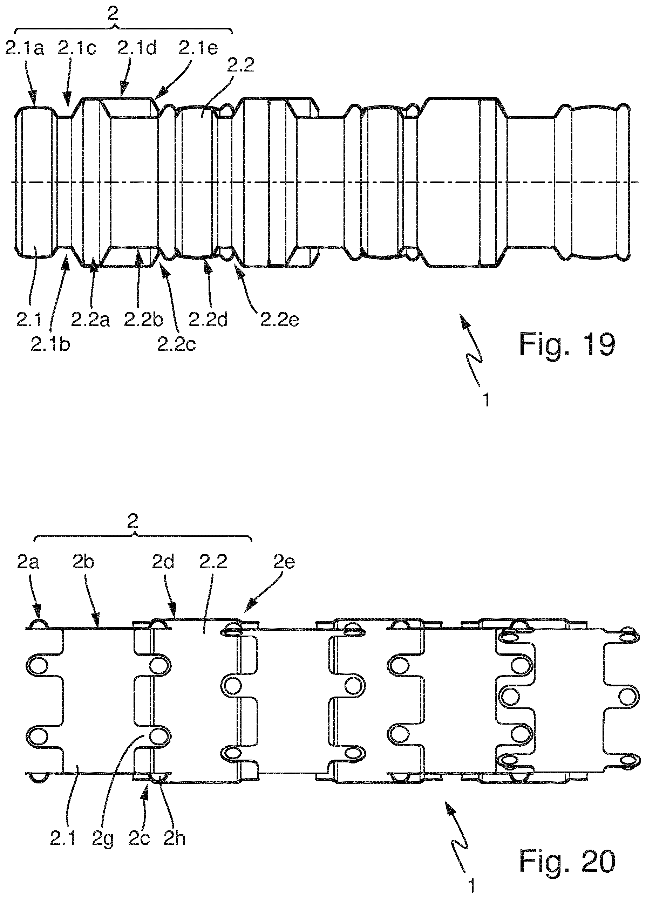

Fig. 19 und Fig. 20 zeigen weitere Ausgestaltungen eines Metallschlauchs 1, die sich von den bisher beschriebenen Varianten dadurch unterscheiden, dass die einzelnen Schlauchelemente 2 nicht einstückig oder einteilig, sondern jeweils als ihrerseits zusammengesetzte Schlauchelemente 2 mit einem ersten Teilelement 2.1 und einem zweiten Teilelement 2.2 zusammengesetzt sind.

Gemäß der Ausgestaltungen in Fig. 19 weisen beide Teilelemente 2.1 und 2.2 jeweils die bereits mehrfach angesprochenen Abschnitte (erster Endabschnitt bis zweiter Endabschnitt) auf, die in Fig. 19 entsprechend bezeichnet sind. Allerdings ist die geometrische Ausgestaltung der betreffenden Abschnitte bei den Teilelementen 2.1 und 2.2 nicht identisch ausgeführt, wie sich Fig. 19 entnehmen lässt. Während das erste Teilelement 2.1 im Wesentlichen den Schlauchelementen 2 gemäß Fig. 18 entspricht, allerdings ohne das dort vorhandene Wirkelement, ist das zweite Teilelement 2.2 im Bereich seines ersten Endabschnitts 2.2a im Querschnitt nach Art eines Kegelstumpfs ausgebildet, woran sich ein glattzylindrischer erster Teilabschnitt 2.2b anschließt. Darauf folgt, in axialer Richtung, der Übergangsabschnitt 2.2c, der zweite Teilabschnitt 2.2d und der zweite Endabschnitt 2.2e. Besonders hervorzuheben ist, dass das zweite Teilelement 2.2 im Bereich des zweiten Teilabschnitts 2.2d eine konvexe Krümmung nach außen aufweist, welche einer entsprechenden Krümmung des ersten Endabschnitts 2.1a des ersten Teilelements 2.1 im Wesentlichen entspricht. Es ergibt sich somit eine gute angulare Beweglichkeit der Teilelemente 2.1 und 2.2 zu einander in diesem Bereich, während es in einem davon getrennten Wechselwirkungsbereich des ersten Endabschnitts 2.2a und des zweiten Teilabschnitts 2.1d zu einer axialen Relativbeweglichkeit kommt. In dem Übergangsabschnitt 2.2c und in dem zweiten Endabschnitt 2.2e kann das zweite Teilelement 2.2 eine radiale Auswölbung der gezeigten Art aufweisen, was insbesondere aus Stabilitätsgründen vorteilhaft sein kann.

Die Fig. 20 zeigt eine grundsätzlich vergleichbare weitere Ausgestaltung eines Metallschlauchs, bei dem die einzelnen Schlauchelemente 2 aus zwei Teilelementen 2.1, 2.2 zusammengesetzt sind; lediglich deren konkrete Ausgestaltung ist anders als in Fig. 19.

Gemäß Fig. 20 ist das erste Teilelement 2.1 als ein grundsätzlich glattzylindrischer Rohrabschnitt ausgebildet, der an seinen Enden gleichmäßig über den Umfang verteilte axiale Vorsprünge (Zungen) aufweist, auf denen jeweils außen eine speziell halbkugelförmige Auswölbung oder Erhebung angeordnet ist. Das zweite Teilelement 2.2 ist ebenfalls als ein im Wesentlichen glattzylindrisches Rohrelement ausgebildet, dessen Endbereiche jeweils einen etwas geringeren (Innen-)Durchmesser aufweisen als der Mittelbereich. Dabei gilt, dass ein Innendurchmesser des zweiten Teilelements 2.2 in dem genannten Mittelbereich geringfügig größer ist als ein effektiver Außendurchmesser des ersten Teilelements im Bereich der Auswölbungen. Dagegen ist ein (Innen-)Durchmesser des zweiten Teilelements 2.2 in den genannten Endbereichen kleiner als der Durchmesser des ersten Teilelements 2.1 im Bereich der Auswölbungen, aber größer als ein (Außen-)Durchmesser des ersten Teilelements 2.1 in den Bereich zwischen den Auswölbungen.

Auf diese Weise sind benachbarte erste und zweite Teilelemente 2.1, 2.2 axial relativ zueinander beweglich und um eine Längsachse der Anordnung im Wesentlichen (frei) drehbar. Die weiter oben explizit erwähnten Merkmale des ersten Teilelements 2.1 und des zweiten Teilelements 2.2 sind in Fig. 20 mit den gleichen Bezugszeichen versehen, die auch in den anderen Figuren zur Bezeichnung der Abschnitte der einzelnen Schlauchelemente 2 verwendet wurden, sofern zutreffend. Lediglich die in das zweite Teilelement 2.2 eingeführten Zungen und Auswölbungen des ersten Teilelements finden hierbei keine Entsprechung. Sie tragen deshalb in Fig. 20 die Bezugszeichen 2g bzw. 2h.

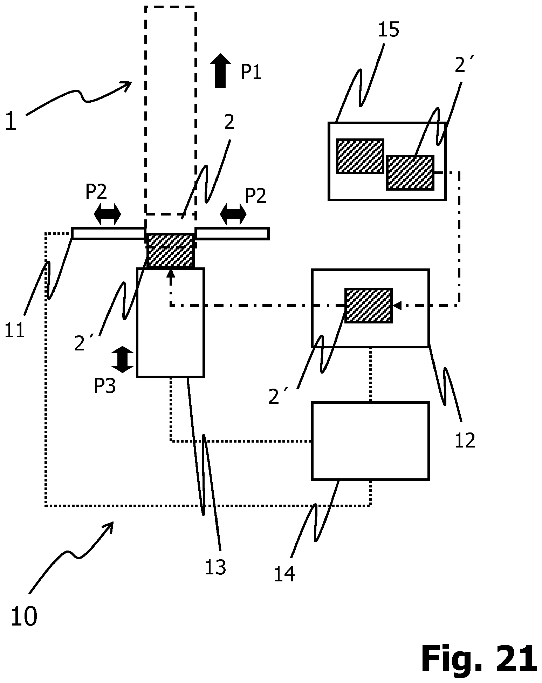

Fig. 21 zeigt schematisch eine Vorrichtung 10 zur Herstellung modular aufgebauter Metallschläuche aus einzelnen Schlauchelementen. Die Vorrichtung 10 umfasst eine Halteeinrichtung 11, die zum Halten oder Fixieren eines ersten Schlauchelements 2 oder eines bereits hergestellten (Teil-)Schlauchs 1 mit einem endständigen ersten Schlauchelement 2 ausgebildet ist. Weiterhin umfasst die Vorrichtung 10 eine Bereitstellungseinrichtung 12, die dazu ausgebildet ist, ein weiteres, mit dem ersten Schlauchelement 2 zu verbindendes Schlauchelement 2' am Ort der Halteeinrichtung 11 mit vorgehbarer Orientierung im Bereich des zweiten Endabschnitts (in Fig. 21 nicht bezeichnet) des ersten Schlauchelements 2 bereitzustellen. Weiterhin umfasst die Vorrichtung 10 eine Fügeeinrichtung 13, die dazu ausgebildet ist, das bereitgestellte weitere Schlauchelement 2' mit seinem ersten Endabschnitt (in Fig. 21 nicht bezeichnet) und seinem ersten Teilabschnitt (in Fig. 21 nicht bezeichnet) in das erste Schlauchelement 2 axial einzuführen. Schließlich umfasst die Vorrichtung 10 noch eine Steuereinrichtung 14, die dazu ausgebildet ist, ein Ende der Schlauchherstellung anzuzeigen, wenn eine vorgegebene Anzahl Schlauchelemente verbunden wurde oder wenn eine vorgegebene Schlauchlänge erreicht wurde. Alternativ oder zusätzlich kann die Steuereinrichtung 14 dazu ausgebildet sein, das Fügen der Schlauchelemente 2, 2' wegbasiert oder kraftbasiert zu steuern.

In Fig. 21 symbolisieren strichpunktierte Pfeile eine Förderbewegung des Schlauchelements 2.1 aus einem Vorrat (Lagereinrichtung) 15 mittels der Bereitstellungseinrichtung 12 zum Fügeort. Die Fügeeinrichtung 13 kann in Richtung des Doppelpfeils P3 beweglich ausgeführt sein, um das bereitgestellte Schlauchelement 2' axial in den bereits hergestellten Schlauchabschnitt und das dort angeordnete erste Schlauchelement 2 einzuführen, wie beschrieben. Die Doppelpfeile P2 symbolisieren ein Auf- und Zufahren der Halteeinrichtung 11, die dazu dient, zumindest das endständige Schlauchelement 2 des Schlauchs 1 zu fixieren, damit das weitere Schlauchelement 2' axial eingeführt werden kann. Der Pfeil P1 symbolisiert eine Förderrichtung des hergestellten Schlauchs 1. Punktierte Linien in Fig. 21 symbolisieren eine steuerungstechnische Wirkverbindung zwischen der Steuereinrichtung 14 einerseits und den angesprochenen weiteren Einrichtungen 11 bis 13 (Halteeinrichtung, Bereitstellungseinrichtung, Fügeeinrichtung) andererseits, um dem angesprochenen Betrieb der Vorrichtung 10 zu ermöglichen.

Die Steuereinrichtung 14 kann nach Art eines programmierbaren Steuerungsrechners ausgeführt sein, was vorliegend nicht weiter zu beschreiben ist. Die Bereitstellungseinrichtung 12 kann als Manipulatorarm oder in sonstiger, geeigneter Weise ausgeführt sein, um die Schlauchelemente 2' aus der Lagereinrichtung 15 zu entnehmen und der Fügeeinrichtung 13 zuzuführen. Halteeinrichtung 11 und Fügeeinrichtung 13 können pneumatisch, hydraulisch oder in sonstiger Weise motorisch angetrieben ausgebildet sein. Die für ein wegbasiertes oder kraftbasiertes Fügen der Schlauchelemente 2, 2' noch erforderliche Sensorik ist in Fig. 21 aus Gründen der Übersichtlichkeit nicht explizit dargestellt.

## Patentansprüche

1. Flexibles Leitungselement mit einem modularen Metallschlauch (1) als flexible, strömungsleitende Innenkomponente, welcher Metallschlauch (1) eine Mehrzahl ringförmiger Schlauchelemente (2, 2', 2.1, 2.2) aufweist, wobei benachbarte Schlauchelemente paarweise axial ineinander gesteckt und formschlüssig ineinander gehalten sind, und mit einem Balg oder Wellschlauch als weitere Komponente
**dadurch gekennzeichnet, dass**
die ringförmigen Schlauchelemente (2, 2', 2.1, 2.2) umfänglich geschlossen sind.

2. Leitungselement nach Anspruch 1,
**dadurch gekennzeichnet, dass**
benachbarte Schlauchelemente (2, 2', 2.1, 2.2) in axialer Richtung zwischen einer ersten Relativposition und einer zweiten Relativposition zueinander beweglich sind.

3. Leitungselement nach Anspruch 1 oder 2,
**dadurch gekennzeichnet, dass**
in der ersten Relativposition benachbarte Schlauchelemente (2, 2', 2.1, 2.2) maximal ineinander geschoben sind, und/oder dass in der zweiten Relativposition benachbarte Schlauchelemente (2, 2', 2.1, 2.2) maximal auseinander gezogen sind.

4. Leitungselement nach einem der Ansprüche 1 bis 3, bei dem ein jeweiliges Schlauchelement (2, 2.1, 2.2) aus einem metallischen Werkstoff als umfänglich geschlossenes Ringteil ausgebildet ist, aufweisend, in axialer Abfolge:
einen ersten Endabschnitt (2a, 2.1a, 2.2a);
einen ersten Teilabschnitt (2b, 2.1b, 2.2b);
einen Übergangsabschnitt (2c, 2.1c, 2.2c);
einen zweiten Teilabschnitt (2d, 2.1d, 2.2d); und
einen zweiten Endabschnitt (2e, 2.1e, 2.2e);
in welchem ersten Endabschnitt (2a, 2.1a, 2.2a) das Schlauchelement (2, 2.1, 2.2) einen größeren Außendurchmesser (DAE1) aufweist als in dem ersten Teilabschnitt (2b, 2.1b, 2.2b);
in welchem zweiten Teilabschnitt (2d, 2.1d, 2.2d) das Schlauchelement einen Innendurchmesser (DIT2) aufweist, der größer ist als der Außendurchmesser (DAE1) in dem ersten Endabschnitt (2a, 2.1a, 2.2a);
in welchem zweiten Endabschnitt (2e, 2.1e, 2.2e) das Schlauchelement (2, 2.1, 2.2) einen Innendurchmesser (DIE2) aufweist, der kleiner ist als der Außendurchmesser (DAE1) in dem ersten Endabschnitt (2a, 2.1a, 2.2a), zur Herstellung modular aufgebauter Metallschläuche (1).

5. Leitungselement nach Anspruch 4,
**dadurch gekennzeichnet, dass**
das Schlauchelement (2, 2.1, 2.2) in dem ersten Teilabschnitt (2b, 2.1b, 2.2b) und/oder in dem zweiten Teilabschnitt (2d, 2.1d, 2.2d) einen konstanten Durchmesser aufweist, oder dass es zumindest in dem ersten Teilabschnitt (2b, 2.1b, 2.2b) eine konvex abgerundete Außenkontur aufweist.

6. Leitungselement nach Anspruch 4 oder 5,
**dadurch gekennzeichnet, dass**
das Schlauchelement (2, 2.1, 2.2) in dem Übergangsabschnitt (2c, 2.1c, 2.2c) eine vorzugsweise axial gleichmäßige Veränderung seines Durchmessers von dem ersten Teilabschnitt (2b, 2.1b, 2.2b) zu dem zweiten Teilabschnitt (2d, 2.1d, 2.2d) aufweist.

7. Leitungselement nach einem der Ansprüche 4 bis 6,
**dadurch gekennzeichnet, dass**
das Schlauchelement (2, 2.1, 2.2) in dem ersten Endabschnitt (2a, 2.1a, 2.2a) eine vorzugsweise axial gleichmäßige Vergrößerung seines Durchmessers hin zu seinen ersten Ende aufweist, höchst vorzugsweise gefolgt von einer insbesondere zu der Vergrößerung symmetrischen, endständigen Verringerung seines Durchmessers bis etwa auf den Durchmesser in dem ersten Teilabschnitt (2b, 2.1b, 2.2b).

8. Leitungselement nach einem der Ansprüche 4 bis 7,
**dadurch gekennzeichnet, dass**
das Schlauchelement (2, 2.1, 2.2) in dem zweiten Endabschnitt (2e, 2.1e, 2.2e) eine vorzugsweise axial gleichmäßige Vergrößerung seines Durchmessers hin zu seinem zweiten Ende aufweist.

9. Leitungselement nach einem der Ansprüche 4 bis 8,
**dadurch gekennzeichnet, dass**
das Schlauchelement (2, 2.1, 2.2) in dem ersten Endabschnitt (2a, 2.1a, 2.2a) und/oder in dem ersten Teilabschnitt (2b, 2.1b, 2.2b) außen wenigstens ein vorzugsweise umfänglich geschlossenes Wirkelement (3) aufweist, dessen Außendurchmesser einem Innendurchmesser des zweiten Teilabschnitts (2d, 2.1d, 2.2d) im Wesentlichen entspricht, welches Wirkelement (3) vorzugsweise dämpfende, isolierende, verschleißmindernde und/oder definierte Fluiddurchlässigkeit-Eigenschaften aufweist.

10. Leitungselement nach einem der Ansprüche 4 bis 9, **dadurch gekennzeichnet, dass**
das Schlauchelement (2) aus wenigstens einem ersten Teilelement (2.1) und einem zweiten Teilelement (2.2) aufgebaut ist, die axial ineinander gesteckt und formschlüssig ineinander gehalten sind, wobei in dem gesteckten Zustand das erste Teilelement (2.1) zumindest den ersten Endabschnitt (2.1a) und den ersten Teilabschnitt (2.1b) ausbildet, und wobei in dem gesteckten Zustand das zweite Teilelement (2.2) zumindest den zweiten Endabschnitt (2.2e) und den zweiten Teilabschnitt (2.2d) ausbildet.

## Claims

1. Flexible duct element having a modular metal hose (1) as flexible, flow-conducting internal component, which metal hose (1) has a plurality of annular hose elements (2, 2', 2.1, 2.2), wherein adjacent hose elements are inserted axially one inside the other in pairs and held one inside the other by interlocking engagement, and having a bellows or corrugated hose as further component,
**characterised in that**
the annular hose elements (2, 2', 2.1, 2.2) are closed around the circumference.

2. Duct element according to claim 1,
**characterised in that**
adjacent hose elements (2, 2', 2.1, 2.2) are movable relative to one another in the axial direction between a first relative position and a second relative position.

3. Duct element according to claim 1 or 2,
**characterised in that**
in the first relative position, adjacent hose elements (2, 2', 2.1, 2.2) are pushed one inside the other to a maximum extent, and/or
in the second relative position, adjacent hose elements (2, 2', 2.1, 2.2) are drawn apart from one another to a maximum extent.

4. Duct element according to any one of claims 1 to 3, wherein a respective hose element (2, 2.1, 2.2) is formed from a metallic material as an annular part that is closed around the circumference, having, in axial sequence:
a first end portion (2a, 2.1a, 2.2a);
a first sub-portion (2b, 2.1b, 2.2b);
a transition portion (2c, 2.1c, 2.2c);
a second sub-portion (2d, 2.1d, 2.2d); and
a second end portion (2e, 2.1e, 2.2e);
in which first end portion (2a, 2.1a, 2.2a) the hose element (2, 2.1, 2.2) has a larger external diameter (DAE1) than in the first sub-portion (2b, 2.1b, 2.2b);
in which second sub-portion (2d, 2.1d, 2.2d) the hose element has an internal diameter (DIT2) that is larger than the external diameter (DAE1) in the first end portion (2a, 2.1a, 2.2a);
in which second end portion (2e, 2.1e, 2.2e) the hose element (2, 2.1, 2.2) has an internal diameter (DIE2) that is smaller than the external diameter (DAE1) in the first end portion (2a, 2.1a, 2.2a),
for the production of metal hoses (1) of modular construction.

5. Duct element according to claim 4,
**characterised in that**
in the first sub-portion (2b, 2.1b, 2.2b) and/or in the second sub-portion (2d, 2.1d, 2.2d) the hose element (2, 2.1, 2.2) has a constant diameter or, at least in the first sub-portion (2b, 2.1b, 2.2b), it has a convexly rounded external contour.

6. Duct element according to claim 4 or 5,
**characterised in that**
in the transition portion (2c, 2.1c, 2.2c) the hose element (2, 2.1, 2.2) has a preferably axially uniform change in its diameter from the first sub-portion (2b, 2.1b, 2.2b) to the second sub-portion (2d, 2.1d, 2.2d).

7. Duct element according to any one of claims 4 to 6,
**characterised in that**
in the first end portion (2a, 2.1a, 2.2a) the hose element (2, 2.1, 2.2) has a preferably axially uniform increase in its diameter towards its first end, most preferably followed by a terminal decrease in its diameter to approximately the diameter in the first sub-portion (2b, 2.1b, 2.2b), which decrease in diameter is especially symmetrical to the increase.

8. Duct element according to any one of claims 4 to 7,
**characterised in that**
in the second end portion (2e, 2.1e, 2.2e) the hose element (2, 2.1, 2.2) has a preferably axially uniform increase in its diameter towards its second end.

9. Duct element according to any one of claims 4 to 8,
**characterised in that**
in the first end portion (2a, 2.1a, 2.2a) and/or in the first sub-portion (2b, 2.1b, 2.2b) the hose element (2, 2.1, 2.2) has on the outside at least one active element (3) which is preferably closed around the circumference and the outer diameter of which corresponds substantially to an internal diameter of the second sub-portion (2d, 2.1d, 2.2d), which active element (3) preferably has damping, insulating, wear-reducing and/or defined fluid permeability properties.

10. Duct element according to any one of claims 4 to 9,
**characterised in that**
the hose element (2) is composed of at least one first sub-element (2.1) and one second sub-element (2.2) which are inserted axially one inside the other and held one inside the other by interlocking engagement, wherein in the inserted state the first sub-element (2.1) forms at least the first end portion (2.1a) and the first sub-portion (2.1b), and wherein in the inserted state the second sub-element (2.2) forms at least the second end portion (2.2e) and the second sub-portion (2.2d).

## Revendications

1. Élément de conduite flexible comprenant un tuyau métallique modulaire (1) en tant que composant intérieur flexible de guidage de l'écoulement, lequel tuyau métallique (1) présente une pluralité d'éléments de tuyau de forme annulaire (2, 2', 2.1, 2.2), des éléments de tuyau adjacents étant enfichés axialement l'un dans l'autre par paires et étant retenus l'un dans l'autre par engagement par correspondance de formes, et comprenant un soufflet ou un tuyau ondulé en tant que composant supplémentaire,
**caractérisé en ce que**
les éléments de tuyau de forme annulaire (2, 2', 2.1, 2.2) sont fermés sur leur périphérie.

2. Élément de conduite selon la revendication 1,
**caractérisé en ce que**
des éléments de tuyau adjacents (2, 2', 2.1, 2.2) peuvent être déplacés les uns par rapport aux autres dans la direction axiale entre une première position relative et une deuxième position relative.

3. Élément de conduite selon la revendication 1 ou 2,
**caractérisé en ce que**
dans la première position relative, des éléments de tuyau adjacents (2, 2', 2.1, 2.2) sont enfoncés au maximum les uns dans les autres, et/ou **en ce que**
dans la deuxième position relative, des éléments de tuyau adjacents (2, 2', 2.1, 2.2) sont retirés au maximum les uns des autres.

4. Élément de conduite selon l'une quelconque des revendications 1 à 3, dans lequel un élément de tuyau respectif (2, 2.1, 2.2) est réalisé à partir d'un matériau métallique en tant que pièce annulaire fermée sur la périphérie, présentant, en succession axiale :
une première portion d'extrémité (2a, 2.1a, 2.2a) ;
une première portion partielle (2b, 2.1b, 2.2b) ;
une portion de transition (2c, 2.1c, 2.2c) ;
une deuxième portion partielle (2d, 2.1d, 2.2d) ; et
une deuxième portion d'extrémité (2e, 2.1e, 2.2e) ;
dans laquelle première portion d'extrémité (2a, 2.1a, 2.2a) l'élément de tuyau (2, 2.1, 2.2) présente un plus grand diamètre extérieur (DAE1) que dans la première portion partielle (2b, 2.1b, 2.2b) ;
dans laquelle deuxième portion partielle (2d, 2.1d, 2.2d) l'élément de tuyau présente un diamètre intérieur (DIT2) qui est supérieur au diamètre extérieur (DAE1) dans la première portion d'extrémité (2a, 2.1a, 2.2a) ;
dans laquelle deuxième portion d'extrémité (2e, 2.1e, 2.2e) l'élément de tuyau (2, 2.1, 2.2) présente un diamètre intérieur (DIE2) qui est inférieur au diamètre extérieur (DAE1) dans la première portion d'extrémité (2a, 2.1a, 2.2a),
pour la fabrication de tuyaux métalliques (1) de construction modulaire.

5. Élément de conduite selon la revendication 4,
**caractérisé en ce que**
l'élément de tuyau (2, 2.1, 2.2), dans la première portion partielle (2b, 2.1b, 2.2b) et/ou dans la deuxième portion partielle (2d, 2.1d, 2.2d) présente un diamètre constant, ou **en ce qu'**il présente au moins dans la première portion partielle (2b, 2.1b, 2.2b) un contour extérieur arrondi sous forme convexe.

6. Élément de conduite selon la revendication 4 ou 5,
**caractérisé en ce que**
l'élément de tuyau (2, 2.1, 2.2), dans la portion de transition (2c, 2.1c, 2.2c), présente une variation de diamètre de préférence axialement régulière de la première portion partielle (2b, 2.1b, 2.2b) à la deuxième portion partielle (2d, 2.1d, 2.2d).

7. Élément de conduite selon l'une quelconque des revendications 4 à 6,
**caractérisé en ce que**
l'élément de tuyau (2, 2.1, 2.2), dans la première portion d'extrémité (2a, 2.1a, 2.2a), présente une augmentation de diamètre de préférence axialement régulière vers sa première extrémité, plus préférablement suivie d'une réduction de diamètre au niveau de l'extrémité, notamment symétrique par rapport à l'augmentation, jusqu'à approximativement le diamètre dans la première portion partielle (2b, 2.1b, 2.2b).

8. Élément de conduite selon l'une quelconque des revendications 4 à 7,
**caractérisé en ce que**
l'élément de tuyau (2, 2.1, 2.2), dans la deuxième portion d'extrémité (2e, 2.1e, 2.2e), présente une augmentation de diamètre de préférence axialement régulière vers sa deuxième extrémité.

9. Élément de conduite selon l'une quelconque des revendications 4 à 8,
**caractérisé en ce que**
l'élément de tuyau (2, 2.1, 2.2), dans la première portion d'extrémité (2a, 2.1a, 2.2a) et/ou dans la première portion partielle (2b, 2.1b, 2.2b), présente à l'extérieur au moins un élément fonctionnel (3) de préférence fermé sur la périphérie, dont le diamètre extérieur correspond essentiellement à un diamètre intérieur de la deuxième portion partielle (2d, 2.1d, 2.2d), lequel élément fonctionnel (3) présente de préférence des propriétés de perméabilité aux fluides de préférence amortissantes, isolantes, réduisant l'usure et/ou définies.

10. Élément de conduite selon l'une quelconque des revendications 4 à 9,
**caractérisé en ce que**
l'élément de tuyau (2) est constitué d'au moins un premier élément partiel (2.1) et un deuxième élément partiel (2.2) qui sont enfichés axialement l'un dans l'autre et retenus l'un dans l'autre par engagement par correspondance de formes, dans l'état enfiché, le premier élément partiel (2.1) constituant au moins la première portion d'extrémité (2.1a) et la première portion partielle (2.1b), et dans l'état enfiché, le deuxième élément partiel (2.2) constituant au moins la deuxième portion d'extrémité (2.2e) et la deuxième portion partielle (2.2d).
